# EUROPEAN PATENT SPECIFICATION

(11) **EP 3 716 884 B1**
(45) Date of publication and mention of the grant of the patent: **22.06.2022**
(21) Application number: 18825785.1
(22) Date of filing: 30.11.2018
(51) Int. Cl.: A61C 1/08

(54) **VARIABLE-CONSTRAINT MECHANICAL GUIDE SYSTEM FOR PERFORMING GUIDED DENTAL IMPLANT PROCEDURES**
MECHANISCHES FÜHRUNGSSYSTEM MIT VARIABLER EINSCHRÄNKUNG ZUR DURCHFÜHRUNG VON GEFÜHRTEN ZAHNIMPLANTATVERFAHREN
SYSTÈME DE GUIDAGE MÉCANIQUE À CONTRAINTE VARIABLE POUR RÉALISER DES PROCÉDURES D'IMPLANT DENTAIRE GUIDÉES

(30) Priority: 30.11.2017 IT 201700138179
(43) Date of publication of application: 07.10.2020
(73) Proprietor: Toledano, Luca, 37129 Verona (IT)
(72) Inventor: Toledano, Luca, 37129 Verona (IT)
(74) Representative: Petraz, Gilberto Luigi
(86) International application number: PCT/IB2018/059511
(87) International publication number: WO 2019/106622

(56) References cited:
- WO-A1-2016/065445
- TW-A- 201 707 656
- US-A1- 2010 297 574

## Description

### TECHNICAL FIELD

The present invention relates to a variable mechanical constraining guide system to be used for guiding surgical instruments during dental implantology procedures or other operations as defined in the claims

In particular, the invention relates to a guided surgical system based on the sliding of a component connected to the milling cutter inserted in a surgical drill in a specific linear guide fixed onto a surgical template in a position such that, once the template has been inserted in the mouth and the two guide components engaged, the milling cutter travels in the envisaged direction for preparing the implant site.

The present invention, although using an already known principle of mutual sliding between two guide components parallel to the direction of the implant site, makes it possible to use guided surgery also in the case of limited opening of the patient's mouth, not possible according to the guided surgery methods known up to now, and simplifies as much as possible the industrial procedures for making the necessary milling cutter guide devices or other instruments for dental operations, making them implementable at a much lower production cost.

The present invention is advantageously applied in the sector of dental implantology and in particular in the sector of alignment means for aligning dental instruments used for implantology operations.

### STATE OF THE ART

In the dental sector, the implantology technique is known that envisages the use of dental implants which are inserted in the mandibular or maxillary bone in the areas without natural teeth, so as to create, where possible, a condition similar to the natural one to make up for the missing teeth.

The implantology procedure provides for an initial study and diagnosis step of the existing situation with the detection of radiographic or tomographic (CT) images in order to reconstruct the most suitable, stable and comfortable solution for the patient's set of teeth, followed by the surgical operation which provides for the milling of the bone with specific milling cutters for preparing the seats for the screws, generally performed after the gum has been cut away from the bone in the implant area, and finally inserting the implants in the bone and subsequently inserting the made-to-measure prostheses which are screwed into the threaded cavities of the implants.

Currently, to reduce the performance times of the surgical operation for the purpose of installing implants and making the positioning thereof in the bone more precise, computer guided implantology techniques are used which provide for the creation of a virtual model based on the patient's CT scan, from which surgical masks are afforded comprising the seats into which the milling cutters will be inserted for the realisation of the seats in the bone intended to house the implants.

Such surgical masks are normally provided with cylindrical bushings centred on the insertion directions of the virtual implants, according to the specifications envisaged by the protocol of the company that supplies the milling cutters and implants. Specific milling cutters inserted in such bushings should allow a preparation to be reproduced in the patient that exactly corresponds to what was decided in the operation planning.

The milling cutters and implants intended for this purpose generally have a cylindrical structure adapted to rotate rubbing against the bushings of the template.

This guided implantology technique has been shown on one hand to be rather expensive as the dentist is obliged to purchase the expensive dedicated surgical components supplied by the company that produces the implants, and on the other hand imprecise due to the necessary mechanical clearance imposed on the milling cutters for being able to rotate inside the guide bushings. Furthermore, the presence of the bushings hinders the correct irrigation of the milling cutters for the cooling thereof, implying the risk of causing damage to the bone due to overheating, and the risk of drawing into the bone metal particles deriving from the friction between the milling cutter and the metal guide bushing.

In order to overcome such drawbacks a mechanical guide system has been designed, described in patent WO 03/073957, based on a structural modification of a dental drill that provides a specific guide instrument that is not coaxial, as in conventional bushing systems, but parallel to the axis of the implant fixed to the head of the drill itself, for guiding dental implantology procedures.

Said guide system, in summary, comprises:
a) a first component, being part of the head of the drill, arranged parallel to the axis of the milling cutter, with a shape adapted to allow the longitudinal sliding thereof only in the direction parallel to the axis of the milling cutter, once inserted in a specific guide component fixed to the surgical template;
b) a second component fixed to the surgical template, comprising a groove with a complementary shape to that of the longitudinal sliding structure of the first component;
c) a plurality of other components having the aim of positioning the linear guide in the desired orientation on the surgical template.

So, using this system during the surgical operation, the operator had to insert the milling cutter into the drill, insert the guide component solidly constrained to the drill into the one solidly constrained to the surgical template, and make it slide so as to deepen the milling cutter into the bone in the planned direction.

Another example that attempts to obviate the problems of conventional guided surgery is described in patent TW 201707656 which comprises a template on which a first guide bushing can be engaged which in turn comprises a second bushing being slidable with respect to the first both in the longitudinal and transverse direction, although with very limited strokes, where such second bushing represents a guide element for a milling cutter.

The advantage proposed by patent TW 201707656 relates to the possibility to insert the milling cutters laterally into the bushings, not requiring the bypassing thereof as in conventional guided surgery.

This system is however adapted to be used only with some particular types of milling cutters, having the working part limited to the end only and all of the remaining part smooth, cylindrical, with the same diameter for the entire length, with the consequent severe functional limit due to the very limited drilling capacity of a similar type of cutter and the poor availability of suitable tools on the market.

The solution proposed by TW 201 707 656 A can moreover only operate if, thanks to a suitable mechanical clearance, the milling cutters are free to rotate and move linearly inside the guide bushings, the two bushings thus not being dissimilar from a conventional system of bushings for implantology in relation to the limited drilling precision.

More in general, these traditional guide systems, valid in themselves as they are able to perform pointing operations of the milling cutter for milling the bone and solving the risks of overheating of the bone and pollution thereof with metal particles, have some drawbacks which the invention wishes to remedy.

The structure described in the mentioned document WO 03/073957, sets some possible limits in terms of strength, as well as larger vertical dimensions with respect to the already substantial dimensions of the head of a conventional drill including the milling cutter, which does not allow a severe problem commonly attributed to guided implantology to be solved, that is the applicability limit in the case of reduced opening of the patient's mouth, in the case of conventional guided implantology due to the need to bypass the bushings with the tip of the milling cutters in order to be able to insert them.

Furthermore, such solutions imply the need to realise a drill specifically conceived for the purpose, for the construction of which the activation of a specific industrial assembly system is essential, with the consequence that such drill will certainly be more expensive than conventional ones. Alternatively, such system implies the need to make complex modifications to a pre-existing drill, with consequent high costs also in this case.

The structure described in the mentioned patent TW 201 707 656 A, further, although allowing a possible lateral access of the milling cutters does not allow a precise and safe guide thereof, also imposing the need to use unsuitable milling cutters for the envisaged purpose due to the poor drilling capacity.

### SUMMARY

The present invention aims to provide a mechanical guide system, that can be used for guiding a dental implantology procedure, creating a condition which is capable of eliminating or at least reducing the drawbacks highlighted above.

The invention sets out in particular to provide an alignment system for aligning the milling cutters able to work with precision also in the case in which the patients' limited capacity to open their mouth prevents the use of conventional guided surgery procedures.

The possibility is envisaged of planning the operations through software or another system and, based on the available bone and the other anatomic structures highlighted in the CT scan, establishes the ideal position of the future implant in the bone, and the axial direction thereof.

Based on the planning, a surgical template is realised, provided with specific seats for the guide rail components that will be fixed to the template itself. The surgeon will apply the template in the patient's mouth in order to be facilitated in making the surgical milling cutters assume the planned direction.

A specific file imported into the planning software, reproducing an appropriate spatial dimension to be afforded in the template determines therein a hole with a shape corresponding to the outer shape of the fixed guide rail component, arranged parallel to the axis of the future implant and placed at the right distance therefrom so that the milling cutter guided by the movable guide slide is located in the precise direction of the axis provided for the future implant, once the guide portion of the movable slide is inserted in the bottom of the corresponding groove of the guide rail.

During the operation, once a flap of gum has been opened for access, the surgeon applies the template in the patient's mouth, then applies the flat movable slide to the shaft of the milling cutter and inserts the latter in the drill, inserts the elongated guide portion of the movable slide into the groove of the guide rail and while drilling the bone with the milling cutter pushes the guide portion to slide against the bottom of the groove itself, parallel to the direction of the implant axis, thus allowing the milling cutter to perform the envisaged stroke for the preparation of the implant site.

Considering the two mutually orthogonal planes intersecting on the envisaged implant axis, the surgeon must manually maintain the desired inclination on one of the two planes, while being assisted by the devices to keep fixed the one on the plane perpendicular thereto, thus limiting the possibilities of mistakes by the surgeon with respect to the free hand surgical practice which the surgeon would be forced to perform due to the patients' reduced possibility to open their mouth.

Said system can be used both for realising a single implant and for multiple implants, applying the specific guide devices to all the implant sites.

This is obtained by a surgical instrument guide system that can be used for guiding a dental implantology procedure, the characteristics of which are described in the main claim.

The dependent claims of the present solution outline advantageous embodiments of the invention.

The main advantage of this solution relates to the fact that the possibility of laterally engaging the guide system allows the use of the system in those cases in which the opening of the patient's mouth does not permit the vertical insertion of the milling cutters in other guide systems, such as conventional bushings or the already known alternative system described above.

A further advantage offered by the system according to the invention is the fact that it comprises a multitude of movable guide slides able to allow an increasing level of mechanical guidance, all compatible with the guide rail fixed to the template, and among which during the operation it is possible to choose which one to use according to the opening of the patient's mouth, including some that can be used according to different orientations with respect to the milling cutter, so that the operator can decide whether to protrude the guide portion more or less in the direction of the extremity of the milling cutter, so as to start guiding the milling cutter sooner or later, always allowing it to be guided before its first contact with the bone with consequent great drilling precision, unlike conventional guided surgery systems in which generally the tip of the milling cutter starts to penetrate into the bone without a guide, and subsequently a wider portion of the milling cutter itself engaging the cylindrical bushing brings it into a more axial position.

Further advantages of this solution relate to the fact that for the industrial production and sale of the invention it is sufficient to realise the components without providing a subsequent assembly line, given that the components can be directly assembled by the user during clinical use, and the fact that the user can perform guided surgery without purchasing a set of expressly dedicated tools, but using the surgical tools already at their disposal and to which they are used, as the shaft of the surgical milling cutters has a universal diameter.

Furthermore, it is not even necessary to use dedicated software, as it is possible to proceed with the 3D printing of a surgical template with the seat provided for the guide rail following the normal work flow of already existing planning software, generally able to realise predefined seats, for the bushings available in their database as well as for the bushings defined by the user, including an asymmetrical one as required by the application of the present invention.

In the same way the system also allows a template to be realised through 3D printing which, instead of being provided with specific seats in which to apply guide rails, incorporates structures that are solidly constrained to the template itself having the shape of the groove of the guide rail in an appropriate position to guide the implantology procedure according to the present invention.

The system can also be easily used on templates already predefined for conventional guided surgery systems, by temporarily inserting in each conventional bushing a turret adaptor component and on this a movable slide and a guide rail according to the invention, therefore keeping the latter in the correct position in which to fix it with resin to the template. Once the guide rail has been fixed to the template, the operator removes every bushing, turret and movable slide from the template, leaving in the seat only the fixed guide rail. At the end of this operation, subject to a series of quick and simple modifications through milling, the conventional template will be perfectly adapted for use with the present invention.

The system can also be used with milling cutters and implants dedicated to conventional guided surgery, using a special movable guide device which rather than engaging the shaft of the milling cutter interacts with the cylindrical structures appointed for rubbing against the conventional guide bushings, thus allowing the use of such devices also in conditions of limited opening of the patient's mouth.

### BRIEF DESCRIPTION OF THE DRAWINGS

Further characteristics and advantages of the invention will become apparent from reading the following description of an embodiment of the invention provided by way of non-limiting example with the aid of the figures illustrated in the appended tables of drawings, in which:
- figures 1, 2 and 3 illustrate, seen from different angles, the fixed guide rail component according to the invention;
- figure 4 illustrates a dental arch affected by a guided implantology operation according to the invention and the mounting of the fixed guide rail component onto a surgical template provided for use on the illustrated dental arch;
- figure 5 shows the same template to which a guide rail has been fixed in the specific seat, inserted in the patient's mouth;
- figures 6 and 7 show, according to two different angles, a movable guide slide for milling cutters;
- figure 8 represents a schematic view of the application mode of the flat movable guide slide to the drill;
- figure 9 represents an application mode of the guide system through the lateral insertion of the same movable slide assembled with drill and milling cutter;
- figure 10 shows a movable guide slide highlighting in particular the flat flank of the guide portion thereof;
- figures 11, 12 and 13, implying for illustrative clarity the presence of the drill and the milling cutter, illustrate the steps of use of the system in limited mouth opening conditions;
- figure 14 shows a view of a hybrid movable guide slide that shows the discontinuous structure of the sliding portion;
- figures 15, 16 and 17, implying for illustrative clarity the presence of the drill and the milling cutter, illustrate the steps of use of the system in average mouth opening conditions;
- figure 18 shows a view of a one-directional movable slide that highlights the shape of the sliding portion thereof;
- figures 19, 20 and 21, implying for illustrative clarity the presence of the drill and the milling cutter, illustrate the steps of use of the system in good mouth opening conditions through the lateral insertion of the sliding portion of the slide in the entry section of the guide rail and the subsequent longitudinal sliding inside the rail itself;
- figures 22 and 23 represent the two possible orientations of a movable guide component applied to a milling cutter inserted in a drill;
- figure 24 shows the possible use of a normal movable guide component;
- figure 25 shows the possible use of a movable guide slide with the engagement of a milling cutter with a larger thickness applied to a drill made possible by a milling cutter with a longer shaft;
- figures 26 and 27 show an hybrid movable slide, generally to be used in average mouth opening conditions;
- figures 28 and 29 illustrate the lateral insertion mode of the flat portion of the hybrid movable slide in the guide rail implying for illustration clarity the presence of the drill and of the milling cutter;
- figures 30 and 31 show the hybrid movable slide overturned, generally to be used in average mouth opening conditions, highlighting the double section of the sliding part thereof;
- figures 32 and 33 illustrate the lateral insertion mode of the portion of the hybrid movable slide overturned in the guide rail implying for illustration clarity the presence of the drill and of the milling cutter;
- figure 34 illustrates a template realised through 3D printing so as to present a guide groove with the same characteristics as that of the fixed guide rail in the appropriate position to allow the operation of the guide according to the invention, realised through three-dimensional printing and forming a single body with the template;
- figure 35 illustrates a movable guide slide provided with a locking device adapted to stop the stroke thereof at an established height inside the groove of the fixed guide rail;
- figures 36, 37 and 38, implying for illustration clarity the presence of the drill and the milling cutter, show the sliding mode of the movable guide slide with the locking device in the fixed guide rail and the stopping mode thereof in the final position envisaged in planning;
- figure 39 illustrates a movable guide slide with a bushing to be used in combination with milling cutters or implants envisaged for use with conventional guide bushings;
- figure 40 illustrates an implant envisaged for use with conventional guided surgery bushings while it is engaged with the drill;
- figures 41 and 42 illustrate the insertion mode of an implant for conventional guided surgery in the movable guide slide with a bushing;
- figure 43 illustrates an hybrid movable slide with a stop, for use in case of reduced mouth opening;
- figure 44 illustrates a flat movable slide with a stop, for use in case of strongly reduced mouth opening;
- figure 45 illustrates an hybrid movable slide with a bushing and stop, for use in case of reduced mouth opening;
- figure 46 illustrates a flat movable slide with a bushing and stop, for use in case of strongly reduced mouth opening;
- figure 47 illustrates a turret adapter component useful for adapting the system to a template previously realised for a conventional guided surgery system;
- figure 48 illustrates the assembly mode of the turret that is inserted in the bushing;
- figure 49 shows the detail of the assembly of the turret, slide and guide rail assembled together;
- figure 50 illustrates a possible template for conventional guided surgery on which a turret has been inserted in the conventional bushing correctly positioning the fixed guide rail on the template by means of assembly with a one-directional movable guide slide;
- figure 51 illustrates the template previously envisaged for conventional guided surgery and now transformed into a template for guided surgery according to the invention.

### DETAILED DESCRIPTION

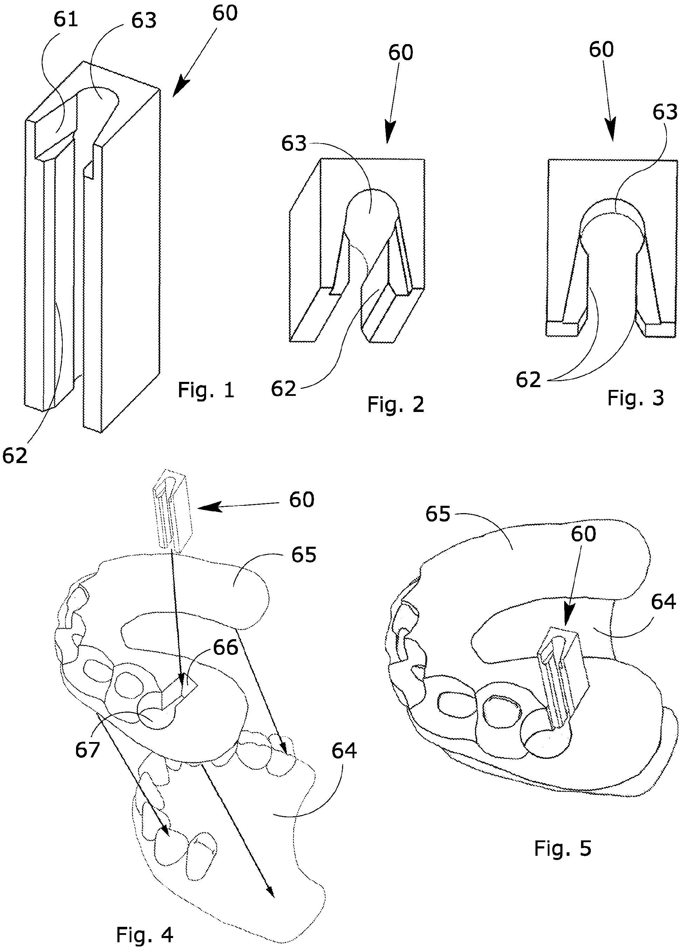

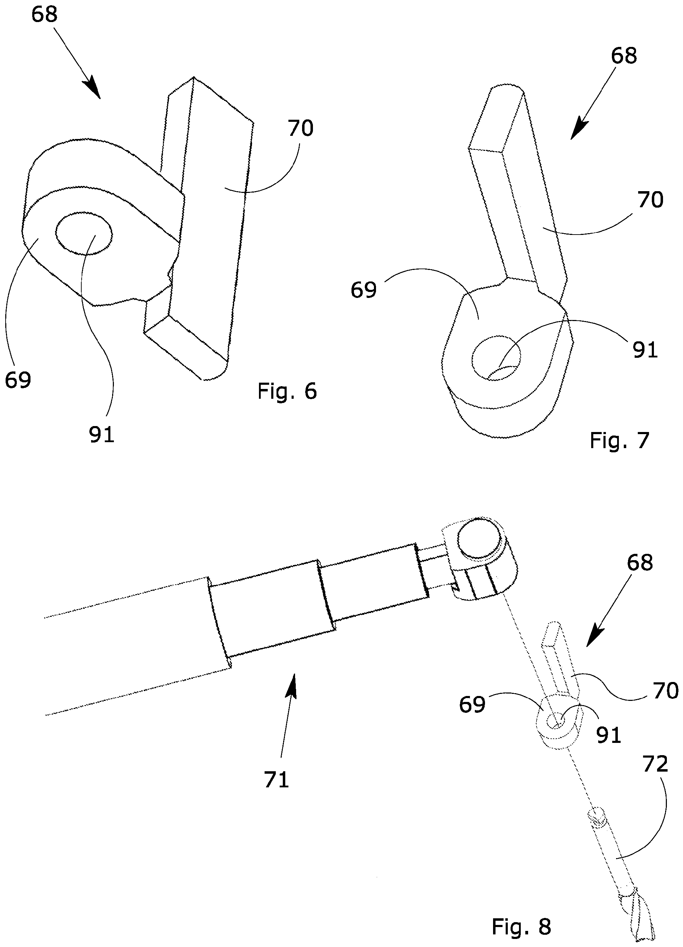

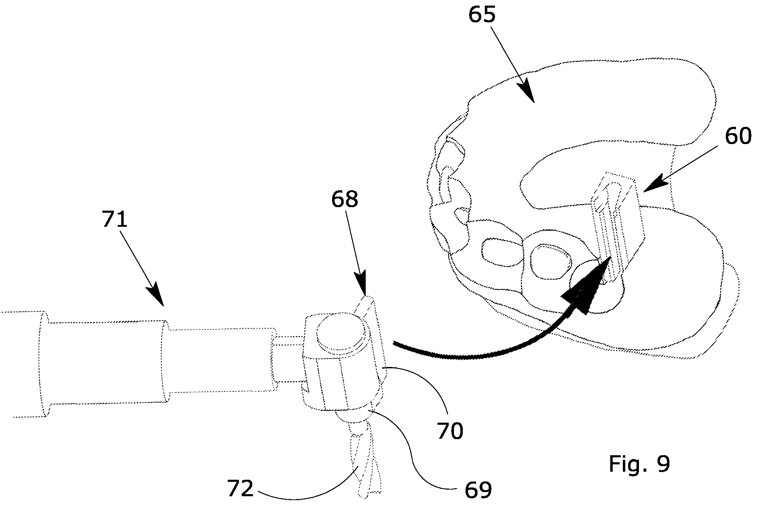

With reference to the appended figures, and initially in particular to figures 1, 2, 3, 4, 5, 6, 7, 8 and 9, the number 64 generally indicates a possible dental arch to be treated through an implantology operation, in which a template 65 is inserted which covers the dental arch itself.

The template is generally realised by taking a print of the affected dental arch so as to obtain an arched conformation that follows the arched conformation of the maxillary or mandibular arch and it is envisaged that for every implant a first seat 66 is provided thereon for a guide rail 60 in an appropriate position to guide a milling cutter 72 associated with a handpiece 71, according to the methods envisaged by the invention, in the planned direction for realising the bone seat for the future implant, said seat 66 being associated with a second seat 67 with a substantially circular shape for the easy passage of the surgical milling cutters.

More precisely, the first seat 66 has a shape that is adapted to precisely house a guide rail 60 and is positioned in an eccentric orientation with respect to the axis of the future implant, while the circular part 67 offers the space for a free passage of the surgical tools guided by the system and is positioned in a coaxial orientation with the future implant.

The guide rail 60 as a consequence of this shape of the hole 91 is inserted with precision and fixed to the template 65 in a position such that during clinical use when the operator engages the portion 70 of a movable slide 68 having a substantially flat shape or the analogous portion of a movable guide slide 73, 74, 77, 80, or other analogues ones not described, in the groove 63 of the rail 60 the milling cutter 72 is automatically positioned in the handpiece 71 combined with the pre-chosen component in the envisaged direction for the realisation of the implant site.

Such movable guide slide 68 is substantially comprised of an engagement portion 69 of the milling cutter and an engagement portion 70 of the rail 60, the two portions being solidly constrained to each other and having the orientation portion 70 parallel to the axis of the cylindrical hole 91 of the portion 69.

The engagement portion of the movable guide slide 68 consists of a washer 69 with a cylindrical central hole 91 having an inner diameter equal to that of the shaft of the surgical milling cutters and a thickness which is compatible with the available length of the shaft of the milling cutter used, however still sufficient to permit a precise relationship between the washer 69 and the shaft of the milling cutter 72 adapted to prevent excessive mechanical clearance of the latter inside the washer 69.

The portion 70 of the movable guide slide 68 consists of an elongated structure with flat flanks, having the same width as the corresponding structure 62 of the guide rail 60 adapted to allow the precise sliding thereof inside the structure 62 and a profile of the most external part adapted to make the component slide precisely on the bottom of the groove 63 of the rail 60.

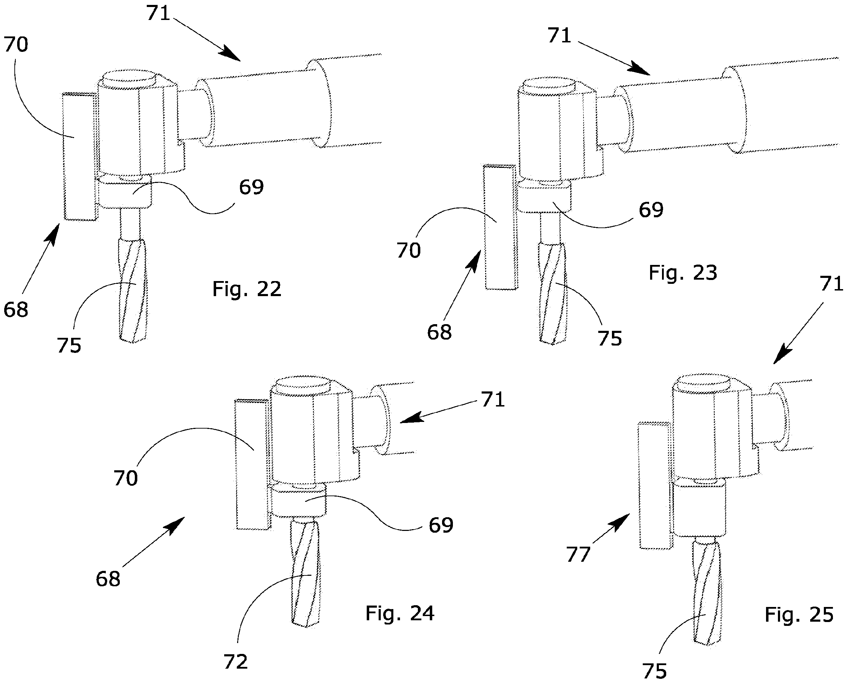

The portion 70 of the flat movable slide 68 can be asymmetrically shaped with respect to the portion 69, thus being more projecting on one side than on the other to make the use thereof more versatile, as illustrated in figures 22 and 23.

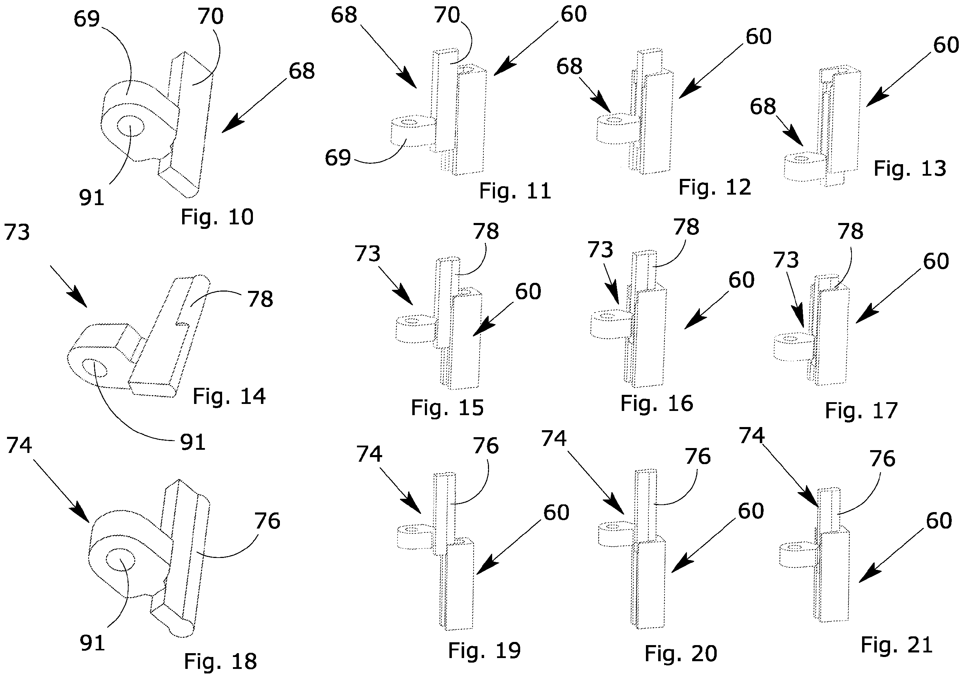

According to the main embodiment of the invention, which can be used in cases of limited opening of the patient's mouth and highlighted in figures 11, 12 and 13 in which, for illustration clarity the presence of the drill and the milling cutter is implied, the possible movement of the movable slide 68 with respect to the rail 60 is illustrated, where the portion 70 of the movable guide slide 68 is substantially flat therefore the operator engages the rail 60 laterally and is assisted by the system in maintaining the milling cutter on a single plane only, corresponding to the centreline plane of the groove 63 of the rail 60, inside which it is free to move vertically and to orient the angle of incidence according to preferences, with the consequence of facilitating the lateral access manoeuvres. The consequent guide will be partial, but will however reduce risks of treatment imprecision, and will however allow the planned direction to be precisely followed making the portion 70 of the flat movable slide 68 slide on the bottom 63 of the groove of the rail 60 duly positioned on the template 65 for such purpose.

According to a further embodiment of the invention, which can be used in cases of good opening of the patient's mouth and highlighted in figures 19, 20 and 21, in which for illustration clarity the presence of the drill and of the milling cutter is implied, the possible movement of a one-directional guide slide 74 is illustrated with respect to the rail 60, where the section of the guide portion 76 of the one-directional movable slide 74 does not have the flat shape of the analogous portion 70 previously exemplified for the flat movable slide 68, but is provided with lateral projections that form a longitudinal rim having a rounded or polygonal section, i.e. having a shape, by way of non-limiting example represented in figure 18, which is complementary to that of the groove 63 of the rail 60, such as to limit, once inserted in the specific seat 63 of the rail 60, the movements of the milling cutter to longitudinal sliding only, thus allowing a precise linear guide of the milling cutter the shaft of which is housed in the one-directional movable slide 74.

During use, it is possible to laterally insert the first stretch of the portion 76 of the movable slide 74 in the specific initial section 61 of the rail 60, make it slide to the bottom of the groove 63 of the rail 60 and subsequently begin to make the one-directional movable slide 74 slide in the rail 60 in the only axial direction permitted by their complementary shapes.

According to a further embodiment of the invention, which can be used in cases of average opening of the patient's mouth and highlighted in figures 15, 16 and 17, wherein for illustration clarity the presence of the drill and of the milling cutter is implied, the possible movement of the hybrid movable slide 73 with respect to the rail 60 is illustrated, where the section of the guide portion of the hybrid movable slide 73 has an intermediate shape with respect to that of the analogous portion 70 previously exemplified for the flat movable slide 68 and that of the analogous portion 76 of the one-directional movable slide 74, i.e. in this case the coupling edge with the groove 63 of the rail 60 comprises a rounded longitudinal rim 78 which has half the longitudinal length and which is located in a position of the edge which is opposite to the introduction position in the rail 60.

In this case it is in other words possible to insert the hybrid slide 73 laterally for the first half of the guide portion in the groove of the rail 60 and to make the slide descend along the groove and subsequently, as soon as the halved second half of the rim 78 starts to interact with the groove of the rail 60, to slide in the only axial direction permitted by the complementary shapes of this portion of the hybrid slide 73 and of the groove 63 of the rail 60, in a way which is analogous to that offered by the one-directional slide 74, but with a smaller vertical dimension.

According to a further embodiment of the invention highlighted by way of non-limiting example in figures 22 and 23, there is a possibility to insert the flat movable slide 68 or the one-directional movable slide 74, not visible in the figure, straight or overturned, so as to be able to start the guide earlier or later, according to individual requirements or the logistical possibilities offered by the operating field.

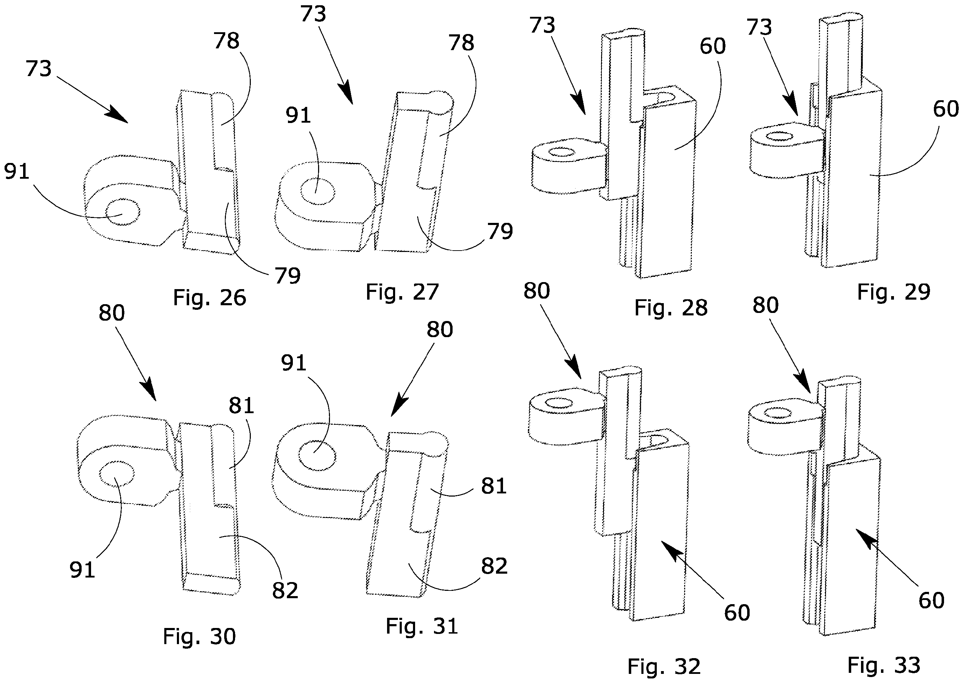

In case of use of the hybrid slide 73, as this has a sliding portion with two different sections, it can be inserted in one way only, which can be seen in figures 15, 16, 17, 28 and 29, but should this type of guide be necessary with an earlier start, the system envisages the use of an overturned hybrid slide 80 having the two sections 81 and 82 with an inverted arrangement with respect to the analogous sections 78 and 79 of the hybrid slide 73, as highlighted in figures 30, 31, 32 and 33.

According to a further embodiment of the invention, illustrated by way of non-limiting example in figures 24 and 25 depicting a flat slide 68 inserted on the shaft of a short milling cutter 75 and a slide with a milling cutter engagement with a larger thickness 77 inserted on the shaft of a long milling cutter 75, the portion of the engagement slide 77 of the shaft of the milling cutter, analogous to the portion 69 described for the flat slide 68, has a greater thickness, so as to exploit the greater available height of the shaft of the milling cutter, as with the same mechanical tolerance between the shaft of the milling cutter and the housing thereof in the guide component, the level of mechanical clearance in their engagement reduces as the thickness of such section increases, therefore causing an increase in the precision of the milling cutter guide.

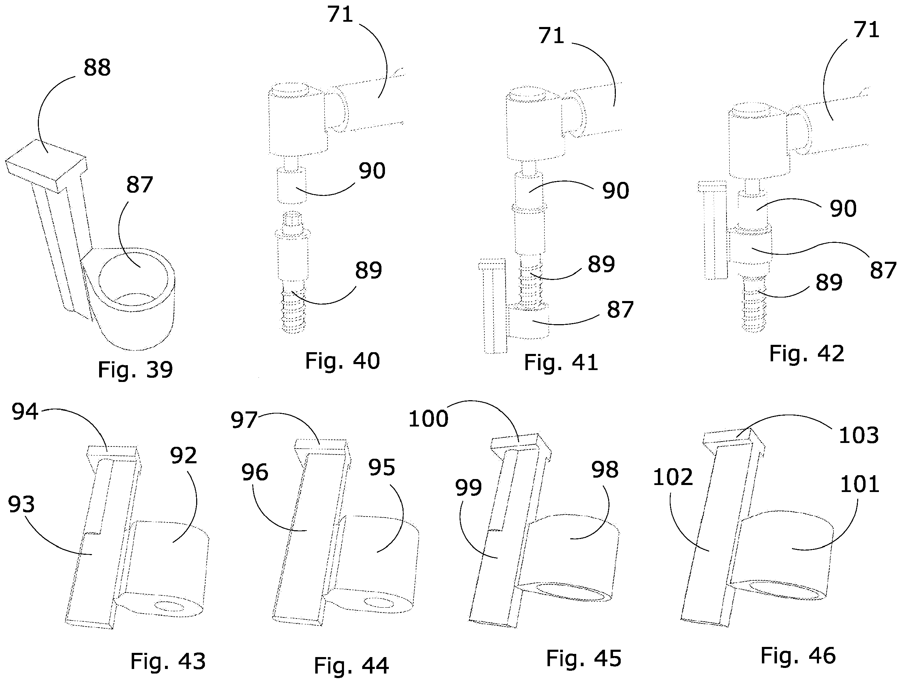

According to the embodiment shown in figures 40, 41 and 42, the reference number 89 indicates an implant provided for conventional guided surgery, to which a well-known device is screwed which, after insertion of the implant in the bone, is removed.

Such implant 89 for guided surgery has a structure which allows it to slide in the bushing 87 of the slide illustrated in figure 39 until it reaches its larger diameter portion which by hitting the bushing 87 itself stops the descent of the implant.

By using such system through the bushing 87 of the slide it is possible to connect the guided surgery implant 89 to the handpiece 71 through a specific wrench 90, conventionally used for the purpose of connecting the implant to the handpiece, to then insert the implant 89 inside the bushing 87 of the movable slide and finally insert the sliding part of the slide into the fixed rail 60 to proceed with the insertion of the implant.

Once the projection of the mounting device of the implant impacts against the bushing 87 and the stop 88 of the slide with the bushing 87 impacts against the guide 60, the implant cannot descend and is located at the envisaged depth.

As can be noted the bushing 90, supplied for any implant by the manufacturers, allows the connection of the implant to the handpiece, is inserted like a milling cutter and is provided with an engagement that allows the specific mounting structure to be engaged by screwing to the implant, which can have different shapes according to whether it is needed for the free or guided insertion of the implant.

Once the implant 89 is engaged with the handpiece 71, the motor makes the implant turn slowly which, once neared to its predefined seat, is screwed and inserted into the bone.

The mounting structure screwed to the implant 89 is removed and the template can be taken out of the patient's mouth.

The reference number 93 indicates in figure 43 the hybrid sliding surface associated with the engagement portion 92 of the milling cutter of an hybrid movable slide for milling cutters provided with a depth stop, while 96 indicates the flat sliding surface of the engagement portion 95 of a flat movable slide for milling cutters provided with depth stops.

The reference number 99 in figure 45 indicates the hybrid sliding surface of the component 98 which relates to an hybrid movable slide with a bushing and depth stop.

Figure 46 shows the flat sliding surface 102 of a flat movable slide 101 with a bushing and depth stop.

Now we will briefly describe an example of use of the described system.

Once the CT scan and subsequent virtual planning using software have been performed, a surgical template is designed so as to have stable anchoring in the patient's mouth and to house a specific guide system at every future envisaged implant site. According to the normal planning software procedures, at the time of determining the definitive shape of the template, it is possible to choose the preferred type of guide bushing within a specific database.

Planning software generally offers the possibility to also import the data of bushings of particular sizes and shapes, defined by the user. The file for reproducing the eccentric structure visible in figure 4 necessary for correctly affording the first seat 66 of the guide rail 60 and the passage 67 for the surgical tools can also be imported into the software by following the same procedure. Such file allows the software to insert it automatically in the desired position.

Once the file has been imported for reproducing the necessary structure and virtually positioned in the correct orientation with respect to the seat provided for the implant, the template 65 is produced through 3D printing. Once the template has been realised and a rail 60 fixed into every envisaged first seat 66, the template will be ready for surgical use, subject to sterilisation. By importing a specific file and using it in the same way, a template 83 can be realised which directly in the matrix realised by 3D printing has a guide groove 84 the same as that of the rail 60.

Once a gap has been opened in the gum according to preferences, the template 65 can be applied in the patient's mouth. Once one of the movable guide components described above has been inserted on the shaft of the milling cutter, chosen according to the opening of the patient's mouth, by way of example, a flat slide 68, it is possible to insert the portion 70 in the specific groove 63 of the rail 60 and make it slide on the bottom of this groove until reaching the bone with the tip of the milling cutter.

At this point, through guidance with notches provided on the milling cutter or using specific depth stops, if envisaged by the implant system used, the operator deepens the milling cutter into the bone until the envisaged depth and performs this operation with all the milling cutters envisaged by the protocol for the type of implant used, guiding each of them with the same method, and repeating the sequence of operations for all the implants envisaged in the treatment plan.

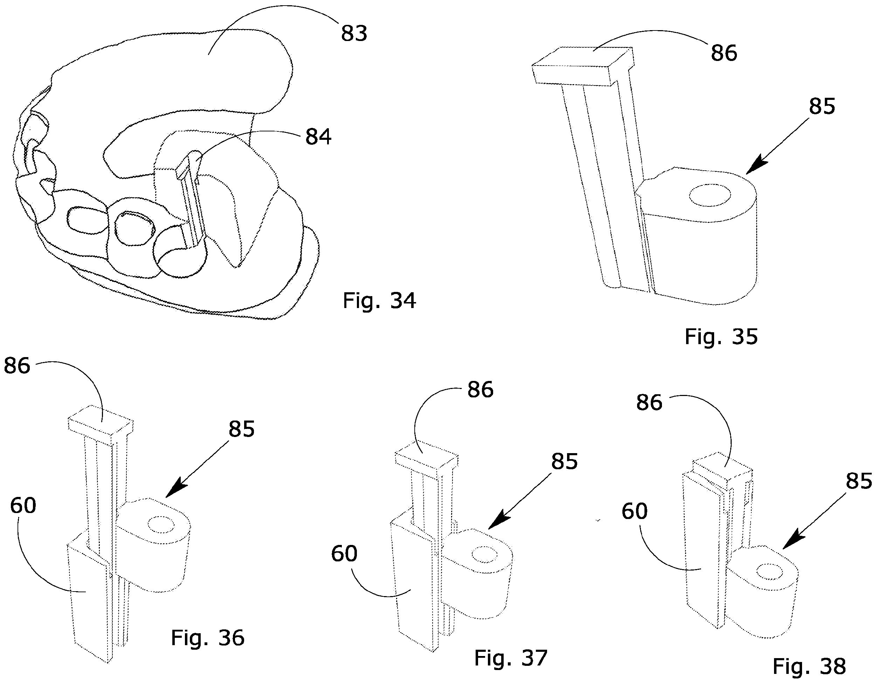

Alternatively it is possible to use the devices described in figures 35, 36, 37, 38, 43 and 44 provided with a specific stop appendage 86, 94 or 97 which allows the stroke of the device to be stopped, and therefore the milling cutter connected thereto, at the established depth.

Once the preparation of the implant seat has been completed, if desired, the implant can also be inserted through a guide by means of a flat slide 68 or other analogous components, applied to the shaft of the adaptor device with which the implant is engaged with the drill to screw it into the bone. Also an implant for use with conventional guided surgery can be inserted according to the invention using a specific movable guide slide 87, 98 or 101 with a bushing.

The template 107 provided for use with conventional guided surgery can be converted into a template to be used according to the invention so as to be able to be used also in limited mouth opening conditions. The conventional template 107 has in every implant site a cylindrical bushing 108.

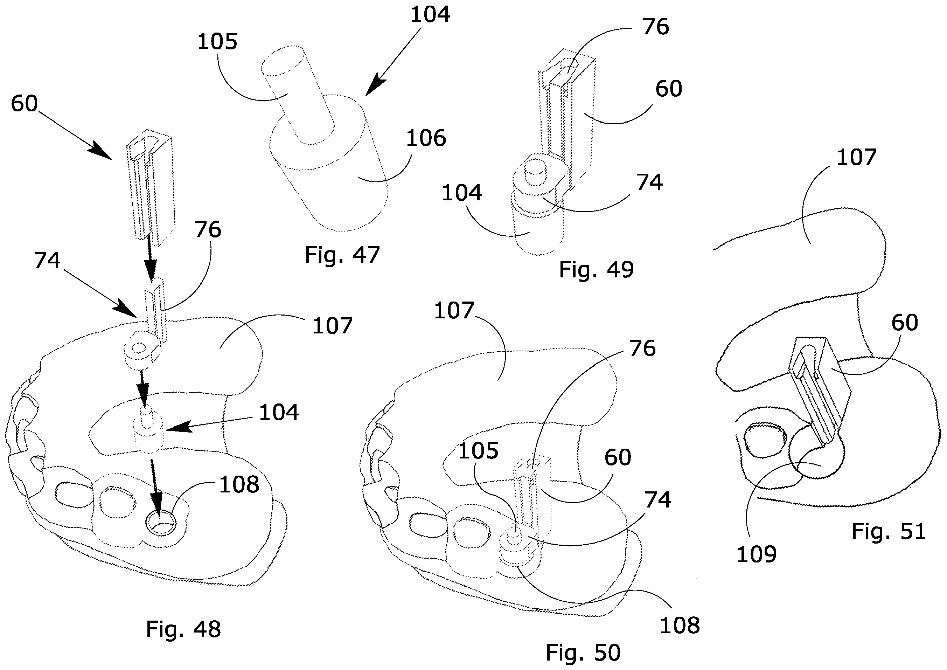

According to a further embodiment represented in figures 47 to 50, an adaptor device of the turret type 104 is used having a larger diameter portion that is inserted in the bushing with the same diameter, while the smaller diameter portion is inserted into the hole 91 of a movable slide 74.

Figures 48, 49, 50 and 51 show a version in which for the use of the turret 104 the guide portion 76 of the slide 74 is inserted in the guide rail 60, therefore by turning the slide 74 on the axis of the turret 104 it is possible to choose the most advantageous position in which to fix the rail 60 with resin, thus transforming the conventional template into one adapted for use according to the invention.

According to further embodiments said guide rail 60 comprises a guide groove 63 associated with a portion 62 with parallel sides for the sliding and lateral insertion of the portion 70 of the movable slide 68 and other analogous components, and a lateral entry portion 61 for the one-directional movable slide 74 and other analogous components.

According to further embodiments the system comprises a multitude of movable guide slides with a different sliding structure 68, 73, 74, 77, 80 adapted to allow use in different mouth opening conditions.

According to further embodiments the system comprises a multitude of movable guide slides with a different sliding structure 85, 92, 95, provided with a sliding stop device 86, 94, 97 adapted to stop the stroke thereof in the planned position.

It is also envisaged to use a multitude of movable guide slides with a bushing with a different sliding structure 87, 98, 101, provided with a sliding stop device 88, 100, 103 adapted to stop the stroke thereof in the planned position.

It is also envisaged to use a turret component 104 for quick adaptation of the template system for guided surgery 107, equipped with two cylindrical portions 105, 106 coaxial to one another, the portion 105 having the diameter of the milling cutter shaft and therefore the same diameter as the hole 91 in the engagement portion 69 of the milling cutter shaft of the movable slide 68 and as the analogous portion of the other movable guide slides 73, 74, 77, 80, 85, 92, 95 and the portion 106 having the same diameter as that of the inside of the bushing for conventional guided surgery 108, said component being usable for fixing a guide rail 60 to the template 107 in the correct position.

Furthermore, the function of the groove of said rail can be changed from an analogous guide groove 84 or other components associated therewith which can be realised through three-dimensional printing to a single body with a respective template 83.

In said guide groove 63 of said guide 60 non-rotary surgical instruments can be inserted, such as instrument inserts for piezoelectric surgery specifically shaped, allowing said instruments to maintain the envisaged alignment during the operation of the instrument.

Finally, implantology instruments can be inserted in said guide groove 63 of said guide 60 adapted for fixing anchoring structures during dental treatments.

## Claims

1. A variable mechanical constraining guide system for guiding surgical instruments during dental implantology procedures on dental arches (64), said system comprising:
a) a template (65) to be positioned on a dental arch (61), said template comprising at least a first seat (66) for introducing a guide means for a surgical tool associated with a handpiece (71), said first seat (66) being associated with a second seat (61) for the passage of said guide means;
b) a guide rail (60, 84) to be associated with said first seat (66) of said template (65) and comprising a guide groove (63) defining a sliding seat for the guide means;
said system further comprising guide means comprising a movable slide (68, 73, 74) having a portion (69) provided with a hole (91) to be associated with a tool (72, 15, 90, 104) and an elongated portion (70) to be connected to said guide rail (60) for said slide (68, 73, 74), and in that said hole (91) and said elongated portion (70) of said movable slide (68, 73, 74) are arranged according to a parallel axis to a sliding axis of the guide groove (63) of said guide rail (60, 84), **characterized in that** said elongated portion (70) is flat and is shaped with two substantially flat faces configured to engage the guide rail (60) laterally.

2. The variable mechanical constraining guide system according to claim 1, **characterised in that** said guide groove (63) of said guide rail (60) is defined by two parallel faces (62) associated with an enlarged groove (63) having a circular or polygonal cross section.

3. The variable mechanical constraining guide system according to any of the preceding claims, **characterised in that** an elongated portion (76) of the movable slide (74), ends with an edge shaped according to a shape which is complementary to that of the bottom of said groove (63) of the rail (60) i.e. with a longitudinal rim conformation which extends along the entire length of the engagement portion in said rail (60) to allow linear movement only within said groove (63).

4. The variable mechanical constraining guide system according to claims 1 or 3, **characterised in that** the elongated portion of the movable slide (73), ends with a longitudinal rim shaped edge (78) which extends for a partial length of the engagement portion in said rail (60), forming two sectors, one of which is rim shaped (78) and one is flat (19).

5. The variable mechanical constraining guide system according to any of the preceding claims, **characterised in that** said elongated portion (70) of the movable guide slide (68) is asymmetrically shaped with respect to the engagement portion (69) with the surgical tool, hence projecting more on one side than on the other.

6. The variable mechanical constraining guide system for mechanically constraining surgical instruments according to any of the preceding claims, **characterised in that** the engagement portion (69) of the guiding flat movable slide (68) and the analogous portion of the other guiding movable slides, in which the through hole (91) is positioned for housing the shaft of the milting cutter (72), has a cylindrical, elliptical, prismatic, regular or irregular shape, and different thickness, so as to be able to exploit the greater available height of the shaft of long milling cutters (75).

7. The variable mechanical constraining guide system according to any of the preceding claims, **characterised in that** said flat movable slide (68) and said movable slide (74) can be positioned in a straight or overturned direction with respect to said guide rail (60).

8. The variable mechanical constraining guide system according to any of the preceding claims, **characterised in that** it comprises an overturned hybrid movable slide (80) having two sections (81, 82) in the inverted arrangement with respect to the analogous sections (78, 79) of a hybrid slide (73).

9. The variable mechanical constraining guide system according to any of the preceding claims, **characterised in that** the guide rail (60) comprising a lateral entry portion (61) for a one-directional movable slide (74) and other analogous components.

10. The variable mechanical constraining guide system according to any of the preceding claims, **characterised in that** it comprises a multitude of movable guide slides with a different sliding structure (85, 92, 95) provided with a sliding stop device, or stroke end (86, 94, 97) adapted to stop the stroke thereof in the planned position in use.

11. The variable mechanical constraining guide system according to any of the preceding claims, **characterised in that** it comprises a multitude of movable guide slides with a bushing with a different sliding structure (87, 98, 101) provided with a sliding stop device, or stroke end (88, 100, 103) adapted to stop the stroke thereof in the planned position in use.

12. The variable mechanical constraining guide system according to any of the preceding claims, said system comprising at least one turret component (104) for quick adaptation of the template system for conventional guided surgery (107), equipped with two cylindrical portions (105, 106) coaxial to one another, the portion (105) having the diameter of the milling cutter shaft and therefore the same diameter as the hole (91) in the engagement portion (69) of the milling cutter shaft of the movable slide (68) and as the analogous portion of the other movable guiding slides (73, 74, 77, 80, 85, 92, 95), and the portion (106) having the same diameter as that of the inside of a bushing for conventional guided surgery (108), said turret component (107) being usable for fixing a guide rail (60) to the conventional template (107) in the correct position.

13. The variable mechanical constraining guide system according to any of the preceding claims, **characterised in that** said rail provided with a guide groove or other components associated therewith is realised in a single body with a respective template

14. The variable mechanical constraining guide system according to any of the preceding claims, **characterized in that** in said guide groove (63) of said guide rail (60) non-rotary surgical instruments can be inserted, such as appropriately shaped instrument inserts for piezoelectric surgery, allowing said instruments to maintain the envisaged alignment during the operation of the instrument.

15. The variable mechanical constraining guide system according to any of the preceding claims **characterised in that** it comprises a moveable slide which can engage a milling cutter with a greater thickness (77) insertable on the shaft of a long milling cutter (75), where the portion of the slide of the shaft of the milling cutter has a greater thickness, so as to exploit the greater available height of the shaft of the milling cutter.

## Patentansprüche

1. Variables mechanisches zwingendes Führungssystem zum Führen chirurgischer Instrumente während dentaler Implantologievorgängen an Zahnbögen (64), wobei das System aufweist:
a) eine Schablone (65), die an einem Zahnbogen (61) zu positionieren ist, wobei die Schablone wenigstens einen ersten Sitz (66) zum Einführen eines Führungsmittels für ein chirurgisches Werkzeug aufweist, das mit einem Handstück (71) verbunden ist, wobei der erste Sitz (66) verbunden ist mit einem zweiten Sitz (61) für die Hindurchführung des Führungsmittels,
b) eine Führungsschiene (60, 84), die mit dem ersten Sitz (66) der Schablone (65) zu verbinden ist und die eine Führungsnut (63) aufweist, die einen Verschiebesitz für das Führungsmittel definiert,
wobei das System ferner Führungsmittel aufweist, die einen bewegbaren Schlitten (68, 73, 74) aufweisen, der einen Abschnitt (69), der mit einem Loch (91) versehen ist, das mit einem Werkzeug (72, 15, 90, 104) zu verbinden ist, und einen langgestreckten Abschnitt (70) hat, der mit der Führungsschiene (60) für den Schlitten (68, 73, 74) zu verbinden ist, und dass das Loch (91) und der langgestreckte Abschnitt (70) des bewegbaren Schlittens (68, 73, 74) gemäß einer parallelen Achse zu einer Verschiebeachse der Führungsnut (63) der Führungsschiene (60, 84) angeordnet ist,
**dadurch gekennzeichnet, dass**
der langgestreckte Abschnitt (70) flach ist und mit zwei im Wesentlichen flachen Seiten gestaltet ist, die konfiguriert sind, um mit der Führungsschiene (60) seitlich im Eingriff zu stehen.

2. Variables mechanisches zwingendes Führungssystem gemäß Anspruch 1, **dadurch gekennzeichnet, dass** die Führungsnut (63) der Führungsschiene (60) durch zwei parallele Seiten (62) definiert ist, die mit einer vergrößerten Nut (63) verbunden sind, die einen kreisförmigen oder polygonförmigen Querschnitt hat.

3. Variables mechanisches zwingendes Führungssystem gemäß irgendeinem der vorhergehenden Ansprüche, **dadurch gekennzeichnet, dass** ein langgestreckter Abschnitt (76) des bewegbaren Schlittens (74) mit einem Rand endet, der gemäß einer Gestalt gestaltet ist, die komplementär ist zu jener des Bodens der Nut (63) der Schiene (60), d.h. mit einer longitudinalen Bordekonfiguration, die sich entlang der gesamten Länge des Eingriffsabschnitts in der Schiene (60) erstreckt, um nur Linearbewegung innerhalb der Nut (63) zu erlauben.

4. Variables mechanisches zwingendes Führungssystem gemäß Ansprüchen 1 oder 3, **dadurch gekennzeichnet, dass** der langgestreckte Abschnitt des bewegbaren Schlittens (73) mit einem als Longitudinalborde gestalteten Rand (78) endet, der sich für eine Teillänge des Eingriffsabschnitts in der Schiene (60) erstreckt, zwei Abschnitte bildend, von denen einer als Borde gestaltet ist (78) und einer flach ist (19).

5. Variables mechanisches zwingendes Führungssystem gemäß irgendeinem der vorhergehenden Ansprüche, **dadurch gekennzeichnet, dass** der langgestreckte Abschnitt (70) des bewegbaren Führungsschlittens (68) asymmetrisch gestaltet ist bezüglich des Eingriffsabschnitts (69) mit dem chirurgischen Werkzeug, wodurch er auf einer Seite mehr hervorsteht als auf der anderen.

6. Variables mechanisches zwingendes Führungssystem zum mechanischen Zwingen von chirurgischen Instrumenten gemäß irgendeinem der vorhergehenden Ansprüche, **dadurch gekennzeichnet, dass** der Eingriffsabschnitt (69) des flachen bewegbaren Führungsschlittens (68) und der analoge Abschnitt der anderen bewegbaren Führungsschlitten, in dem das Durchgangsloch (91) positioniert ist zum Unterbringen des Schafts des Fräsers (72), eine zylindrische, elliptische, prismatische, reguläre oder irreguläre Gestalt, und unterschiedliche Dicke hat, um imstande zu sein, die größere verfügbare Höhe des Schafts langer Fräser (75) auszunutzen.

7. Variables mechanisches zwingendes Führungssystem gemäß irgendeinem der vorhergehenden Ansprüche, **dadurch gekennzeichnet, dass** der flache bewegbare Schlitten (68) und der bewegbare Schlitten (74) in einer geraden oder überkippten Richtung bezüglich der Führungsschiene (60) positioniert sein können.

8. Variables mechanisches zwingendes Führungssystem gemäß irgendeinem der vorhergehenden Ansprüche, **dadurch gekennzeichnet, dass** es aufweist einen überkippten hybriden bewegbaren Schlitten (80), der zwei Abschnitte (81, 82) in einer invertierten Anordnung bezüglich der analogen Abschnitte (78, 79) eines hybriden Schlittens (73) hat.

9. Variables mechanisches zwingendes Führungssystem gemäß irgendeinem der vorhergehenden Ansprüche, **dadurch gekennzeichnet, dass** die Führungsschiene (60) einen lateralen Eingangsabschnitt (61) für einen unidirektional bewegbaren Schlitten (74) und andere analoge Komponenten hat.

10. Variables mechanisches zwingendes Führungssystem gemäß irgendeinem der vorhergehenden Ansprüche, **dadurch gekennzeichnet, dass** es eine Vielzahl von bewegbaren Führungsschlitten mit unterschiedlicher Verschiebestruktur (85, 92, 95) aufweist, bereitgestellt mit einer Verschiebestoppvorrichtung oder einem Ausfahrhubende (86, 94, 97), angepasst, um bei der Benutzung den Ausfahrhub davon in der geplanten Position zu stoppen.

11. Variables mechanisches zwingendes Führungssystem gemäß irgendeinem der vorhergehenden Ansprüche, **dadurch gekennzeichnet, dass** es aufweist eine Vielzahl von bewegbaren Führungsschlitten mit einer Hülse mit einer unterschiedlichen Verschiebestruktur (87, 98, 101), bereitgestellt mit einer Verschiebestoppvorrichtung oder einem Ausfahrhubende (88, 100 103) angepasst, um bei der Benutzung den Ausfahrhub davon in der geplanten Position zu stoppen

12. Variables mechanisches zwingendes Führungssystem gemäß irgendeinem der vorhergehenden Ansprüche, wobei das System aufweist wenigstens eine Revolverkopfkomponente (104) zur schnellen Anpassung des Schablonensystems für konventionell geführte Chirurgie (107), ausgestattet mit zwei zylindrischen Abschnitten (105, 106), die koaxial zueinander sind, wobei der Abschnitt (105) den Durchmesser des Fräser-Schafts und damit den gleichen Durchmesser wie das Loch (91) im Eingriffsabschnitt (69) des Fräser-Schafts des bewegbaren Schlittens (68) und wie der analoge Abschnitt der anderen bewegbaren Führungsschlitten (73, 74, 77, 80, 85, 92, 95) hat, und der Abschnitt (106) den gleichen Durchmesser wie jener der Innenseite einer Hülse für konventionell geführte Chirurgie (108) hat, wobei die Revolverkopfkomponente (107) verwendbar ist zum Fixieren einer Führungsschiene (60) an der konventionellen Schablone (107) in der korrekten Position.

13. Variables mechanisches zwingendes Führungssystem gemäß irgendeinem der vorhergehenden Ansprüche, **dadurch gekennzeichnet, dass** die Schiene, die mit einer Führungsnut oder anderen damit verbundenen Komponenten bereitgestellt ist, in einem einzelnen Körper mit einer jeweiligen Schablone realisiert ist.

14. Variables mechanisches zwingendes Führungssystem gemäß irgendeinem der vorhergehenden Ansprüche, **dadurch gekennzeichnet, dass** in die Führungsnut (63) der Führungsschiene (60) nicht-drehbare chirurgische Instrumente eingesetzt werden können, wie z.B. geeignet gestaltete Instrumenteneinsätze für piezoelektrische Chirurgie, es den Instrumenten erlaubend, die geplante Ausrichtung während des Betriebs des Instruments aufrechtzuerhalten.

15. Variables mechanisches zwingendes Führungssystem gemäß irgendeinem der vorhergehenden Ansprüche, **dadurch gekennzeichnet, dass** es aufweist einen bewegbaren Schlitten, welcher mit einem Fräser mit größerer Dicke (77) in Eingriff stehen kann, einsetzbar am Schaft eines langen Fräsers (75) einsetzbar ist, wo der Abschnitt des Schlittens des Schafts des Fräsers eine größer Dicke hat, um die größere verfügbare Höhe des Schafts des Fräsers auszunutzen.

## Revendications

1. Système de guidage à contrainte mécanique variable destiné à être utiliser pour guider des instruments chirurgicaux pendant des procédures d'implantologie dentaire sur des arcades dentaires (64), ledit système comprenant :
a) un gabarit (65) à positionner sur une arcade dentaire (61), ledit gabarit comprenant au moins un premier siège (66) pour introduire un moyen de guidage pour un outil chirurgical associé à une pièce à main (71), ledit premier siège (66) étant associé à un second siège (61) pour le passage dudit moyen de guidage ;
b) un rail de guidage (60, 84) à associer audit premier siège (66) dudit gabarit (65) et comprenant une rainure de guidage (63) définissant un siège coulissant pour le moyen de guidage ;
ledit système comprenant en outre un moyen de guidage comprenant un coulisseau mobile (68, 73, 74) ayant une partie (69) pourvue d'un trou (91) à associer à un outil (72, 15, 90, 104) et une partie allongée (70) à relier audit rail de guidage (60) dudit coulisseau (68, 73, 74), et en ce que ledit trou (91) et ladite partie allongée (70) dudit coulisseau mobile (68, 73, 74) sont agencés selon un axe parallèle à l'axe de coulissement de la rainure de guidage (63) dudit rail de guidage (60, 84),
**caractérisé en ce que** ladite partie allongée (70) est plate et est mise en forme avec deux faces sensiblement plates configurées pour venir en prise avec le rail de guidage (60) latéralement.

2. Système de guidage à contrainte mécanique variable selon la revendication 1, **caractérisé en ce que** ladite rainure de guidage (63) dudit rail de guidage (60) est définie par deux faces parallèles (62) associées à une rainure de guidage (63) ayant une section transversale circulaire ou polygonale.

3. Système de guidage à contrainte mécanique variable selon l'une quelconque des revendications précédentes, **caractérisé en ce qu'**une partie allongée (76) du coulisseau mobile (74) se termine par un bord mis en forme selon une forme qui est complémentaire de celle du fond de ladite rainure (63) du rail (60), c'est-à-dire avec une conformation de rebord longitudinal qui s'étend sur toute la longueur de la partie de mise en prise dans ledit rail (60) pour permettre un déplacement linéaire uniquement à l'intérieur de ladite rainure (63).

4. Système de guidage à contrainte mécanique variable selon les revendications 1 ou 3, **caractérisé en ce que** la partie allongée du coulisseau mobile (73) se termine par un bord mis en forme de rebord longitudinal (78) qui s'étend sur une longueur partielle de la partie de mise en prise dans ledit rail (60), en formant deux secteurs, dont un est mis en forme de rebord (78) et l'autre est plat (19).

5. Système de guidage à contrainte mécanique variable selon l'une quelconque des revendications précédentes, **caractérisé en ce que** ladite partie allongée (70) du coulisseau de guidage mobile (68) est mise en forme de manière asymétrique par rapport à la partie de mise en prise (69) avec l'outil chirurgical, en faisant ainsi saillie plus d'un côté que de l'autre.

6. Système de guidage à contrainte mécanique variable pour contraindre mécaniquement des instruments chirurgicaux selon l'une quelconque des revendications précédentes, **caractérisé en ce que** la partie de mise en prise (69) du coulisseau mobile plat de guidage (68) et la partie analogue des autres coulisseaux mobiles de guidage, où le trou traversant (91) est positionné pour loger la tige de la fraise (72), a une forme cylindrique, elliptique, prismatique, régulière ou irrégulière, et une épaisseur différente, de manière à pouvoir exploiter la plus grande hauteur disponible de la tige de fraises longues (75).

7. Système de guidage à contrainte mécanique variable selon l'une quelconque des revendications précédentes, **caractérisé en ce que** ledit coulisseau mobile plat (68) et ledit coulisseau mobile (74) peuvent être positionnés dans une direction rectiligne ou renversée par rapport audit rail de guidage (60).

8. Système de guidage à contrainte mécanique variable selon l'une quelconque des revendications précédentes, **caractérisé en ce qu'**il comprend un coulisseau mobile hybride renversé (80) ayant deux sections (81, 82) dans l'agencement inversé par rapport aux sections analogues (78, 79) d'un coulisseau hybride (73).

9. Système de guidage à contrainte mécanique variable selon l'une quelconque des revendications précédentes, **caractérisé en ce que** le rail de guidage (60) comprend une partie d'entrée latérale (61) pour un coulisseau mobile unidirectionnel (74) et d'autres composants analogues.

10. Système de guidage à contrainte mécanique variable selon l'une quelconque des revendications précédentes, **caractérisé en ce qu'**il comprend une multitude de coulisseaux de guidage mobiles avec une structure coulissante différente (85, 92, 95) munie d'un dispositif d'arrêt de coulissement, ou d'une extrémité de course (86, 94, 97) adaptée pour arrêter sa course dans la position d'utilisation prévue.

11. Système de guidage à contrainte mécanique variable selon l'une quelconque des revendications précédentes, **caractérisé en ce qu'**il comprend une multitude de coulisseaux de guidage mobiles avec une douille avec une structure coulissante différente (87, 98, 101) munie d'un dispositif d'arrêt de coulissement, ou d'une extrémité de course (88, 100, 103) adaptée pour arrêter sa course dans la position d'utilisation prévue.

12. Système de guidage à contrainte mécanique variable selon l'une quelconque des revendications précédentes, ledit système comprenant au moins un composant de tourelle (104) pour une adaptation rapide du système de gabarit pour une chirurgie guidée classique (107), équipé de deux parties cylindriques (105, 106) coaxiales l'une à l'autre, la partie (105) ayant le diamètre de la tige de fraise et donc le même diamètre que le trou (91) dans la partie de mise en prise (69) la tige de fraise du coulisseau mobile (68) et la partie analogue des autres coulisseaux de guidage mobiles (73, 74, 77, 80, 85, 92, 95), et la partie (106) ayant le même diamètre que celui de l'intérieur d'une douille pour une chirurgie guidée classique (108), ledit composant de tourelle (107) pouvant être utilisé pour fixer un rail de guidage (60) au gabarit classique (107) dans la position correcte.

13. Système de guidage à contrainte mécanique variable selon l'une quelconque des revendications précédentes, **caractérisé en ce que** ledit rail muni d'une rainure de guidage ou d'autres composants associés à celui-ci est réalisé dans un corps unique avec un gabarit respectif

14. Système de guidage à contrainte mécanique variable selon l'une quelconque des revendications précédentes, **caractérisé en ce que** dans ladite rainure de guidage (63) dudit rail de guidage (60) peuvent être insérés des instruments chirurgicaux non rotatifs, tels que des inserts d'instrument mis en forme de manière appropriée pour une chirurgie piézoélectrique, permettant auxdits instruments de maintenir l'alignement envisagé pendant le fonctionnement de l'instrument.

15. Système de guidage à contrainte mécanique variable selon l'une quelconque des revendications précédentes, **caractérisé en ce qu'**il comprend un coulisseau mobile qui peut venir en prise avec une fraise d'une épaisseur supérieure (77) pouvant être insérée sur la tige d'une longue fraise (75), où la partie du coulisseau de la tige de la fraise a une épaisseur supérieure, de manière à exploiter la plus grande hauteur disponible de la tige de la fraise.
